# FASCICULE DE BREVET EUROPEEN

(11) **EP 3 146 191 B1**
(45) Date de publication et mention de la délivrance du brevet: **13.03.2019**
(21) Numéro de dépôt: 15732780.0
(22) Date de dépôt: 20.05.2015
(51) Int. Cl.: F16K 31/126, F02K 9/58, F16K 5/00

(54) **DISPOSITIF DE RÉGULATION DE DÉBIT AMÉLIORÉ AYANT UNE MASSE RÉDUITE**
VERBESSERTE DURCHFLUSSSTEUERUNGSVORRICHTUNG MIT REDUZIERTEM GEWICHT
IMPROVED FLOW-CONTROL DEVICE WITH REDUCED WEIGHT

(30) Priorité: 21.05.2014 FR 1454561
(43) Date de publication de la demande: 29.03.2017
(73) Titulaire: SAFRAN AIRCRAFT ENGINES, 75015 Paris (FR); CENTRE NATIONAL D'ETUDES SPATIALES, 75039 Paris Cedex 01 (FR)
(72) Inventeur: NOMERANGE, Philippe, F-78300 Poissy (FR)
(74) Mandataire: Gilbey, Vincent
(86) Numéro de dépôt international: PCT/FR2015/051326
(87) Numéro de publication internationale: WO 2015/177467

(56) Documents cités:
- GB-A- 2 071 285
- US-A- 4 777 794
- US-B1- 6 233 919

## Description

### DOMAINE TECHNIQUE GENERAL

La présente invention concerne le domaine des équipements pour la régulation de débit de gaz, et trouve une application particulière pour les moteurs fusée de faible poussée.

### ETAT DE L'ART

Les moteurs fusée cryotechniques de faible poussée présentent plusieurs problématiques liées notamment aux contraintes de dimensionnement des composants, en particulier en ce qui concerne les éléments de régulation de débit utilisés dans de tels moteurs.

En effet, parmi les sous-systèmes d'un moteur, la plupart ont une échelle, et donc une masse, qui dépend majoritairement du débit massique de fluide traversant le moteur. Ces sous-systèmes ont ainsi une masse relative qui diminue avec l'augmentation de la poussée maximale du moteur.

En revanche, d'autres sous-systèmes tels que les équipements de régulation de débit de gaz ont une masse qui dépend également fortement d'autres paramètres tels que les interfaces, les exigences fonctionnelles et les contraintes en termes de technologie utilisée.

Plus précisément, dans le cas d'équipements de régulation de débit de gaz à commande électrique tels que couramment utilisés, plusieurs composants sont nécessaires afin de réaliser la fonction de régulation de débit :
- un moteur électrique, dont les dimensions sont minimisées grâce à l'utilisation d'un élément de réduction de vitesse et d'amplification des efforts générés, il existe cependant une taille limite sous laquelle il est impossible de descendre, et une limite pratique au-delà de laquelle la perte de rendement ne peut plus être compensée par le gain en effort moteur ;
- un élément de réduction de vitesse et d'amplification des efforts générés, dont le volume et la masse dépendent en premier lieu de la technologie retenue ; par exemple train épicycloïdal, réducteur planétaire ou système à pièces déformables ;
- les composants annexes tels que les capteurs, les éléments d'étanchéité, les connectiques, dont la taille est indépendante du débit traversant l'équipement de régulation de débit.

Le document US 6233919 présente un exemple de valve de régulation de débit pour un moteur fusée piloté par régulation de pressions appliquées sur des surfaces opposées d'un clapet. Cependant, la structure proposée dans ce document n'est pas satisfaisante en termes d'encombrement, et est également problématique en termes de réalisation du fait de la multitude de conduits aménagés dans le corps de la valve.

La miniaturisation des équipements de régulation de débit de gaz est donc problématique, en ce que les équipements actuels ne permettent pas une réduction d'échelle et de masse satisfaisante avec la réduction du débit de fluide qui les traverse.

### PRESENTATION DE L'INVENTION

Afin de répondre au moins partiellement à ces diverses problématiques, la présente invention propose un dispositif de régulation de débit d'un gaz dans un conduit, comprenant un clapet muni d'un actionneur, le clapet étant configuré de manière à sélectivement obturer le conduit, caractérisé en ce que le déplacement du clapet est piloté par la résultante
d'une part de la pression en amont du clapet dans le conduit qui s'exerce sur une surface proximale du clapet,
d'autre part, d'une pression de pilotage appliquée sur une surface distale du clapet, supérieure à la surface proximale du clapet, ladite pression de pilotage étant établie dans une chambre d'amplification munie d'une ligne d'alimentation et d'une ligne de vidange, l'une desdites lignes d'alimentation ou de vidange ayant un débit fixe, et l'autre ayant un débit variable piloté par une commande.

Selon un mode de réalisation particulier, la chambre d'amplification est formée par un soufflet dont une extrémité est reliée à la surface proximale du clapet, et dont une autre extrémité est fixe.

Le conduit comprend typiquement une portion amont et une portion aval non alignées, le clapet étant aligné et monté coulissant dans la portion amont de sorte que la surface proximale du clapet corresponde à la section interne de la portion amont du conduit.

Selon un mode de réalisation particulier, la commande est choisie parmi les actionneurs suivant : un actionneur à céramiques piézo-électriques, un actionneur de type piézo-électrique à amplification mécanique, un actionneur à effet magnétostrictif ou un actionneur utilisant des alliages à mémoire de forme magnétique, dont les déformations sont contrôlées par un champ électrique ou magnétique externe qui leur est appliqué.

Selon un mode de réalisation particulier, la chambre d'amplification est alimentée en gaz par prélèvement dans le conduit en amont du clapet.

### PRESENTATION DES FIGURES

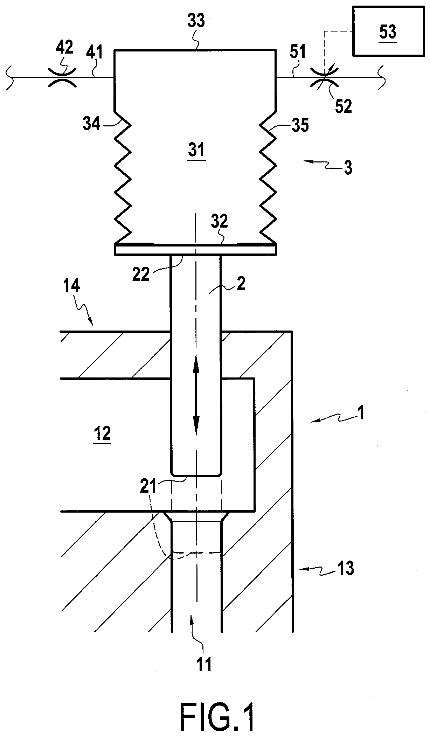

D'autres caractéristiques, buts et avantages de l'invention ressortiront de la description qui suit, qui est purement illustrative et non limitative, et qui doit être lue en regard de la figure 1 annexée, qui illustre schématiquement un dispositif de régulation selon un aspect de l'invention.

### DESCRIPTION DETAILLEE

La figure 1 illustre schématiquement un dispositif de régulation selon un aspect de l'invention.
On représente sur cette figure un conduit 1 pour l'écoulement d'un gaz, par exemple un gaz cryogénique.

On représente sur la figure 1 une portion du conduit 1, et on repère par 11 l'admission de gaz dans cette portion, et par 12 le refoulement de gaz dans cette portion. Le gaz s'écoule donc de l'admission 11 vers le refoulement 12.

Un clapet 2 est positionné dans le conduit 1, de manière à sélectivement l'obturer ou à permettre un passage variable de gaz de l'admission 11 vers le refoulement 12.

La loi de variation du débit (ou de la section de passage découverte) en fonction de la position du clapet 2 peut être adaptée moyennant l'introduction autour du clapet 2 d'un manchon fixe percé d'un trou de forme adaptée à la loi souhaitée, qui est progressivement dégagé par le mouvement du clapet 2.

Le clapet 2 est piloté au moyen d'une commande 3.
Dans le mode de réalisation représenté, le clapet 2 est monté coulissant en translation, entre une position de butée fermée dans laquelle il obture totalement le conduit 1, et une position de butée ouverte dans laquelle le débit dans le conduit 1 est à sa valeur maximale.

La commande 3 réalise un pilotage proportionnel en pression du déplacement du clapet 2.

Le pilotage en pression du clapet 2 résulte de pressions s'appliquant sur deux surfaces opposées du clapet ; une surface proximale 21 du clapet 2 et une surface distale 22 du clapet 2.

La surface proximale 21 du clapet 2 est la surface du clapet sur laquelle s'applique la pression exercée par le gaz en amont du clapet 2. Dans le cas où le clapet 2 obture le conduit 1, il s'agit de la pression au niveau de l'admission 11, aux pertes de charge près.
La surface distale 22 du clapet 2 est la surface du clapet 2 opposée à la surface proximale 21.

La commande 3 comprend une chambre d'amplification 31 ayant un volume variable, et dont une cloison forme la surface distale du clapet 2. Le volume de la chambre d'amplification 31 est ainsi proportionnel au déplacement du clapet 2.

Dans le mode de réalisation représenté, le conduit 1 est en forme de coude ; il comprend ainsi une portion amont 13 et une portion aval 14 sensiblement perpendiculaires. Le clapet 2 est ici monté coulissant selon l'axe de la section amont 13, et a une section identique à la section interne de la portion amont 13, de sorte que le clapet 2 obture la portion amont 13 lorsqu'il est inséré dans la portion amont 13. La pression s'exerçant sur la surface distale 22 du clapet 2 tend à le pousser hors de la portion amont 13 en le faisant coulisser, et ainsi à permettre un passage de gaz dans le conduit 1.

La chambre d'amplification 31 telle que présentée est délimitée par un fond fixe 33, une partie proximale mobile 32 montée fixe sur la surface distale 22 du clapet 2, et des parois latérales 34 et 35 mobiles permettant un mouvement relatif de la partie proximale 32 par rapport au fond 33 de manière à modifier le volume de la chambre d'amplification 31.

Dans le mode de réalisation représenté, les parois latérales 34 et 35 ont une structure de type accordéon, par exemple un soufflet assurant l'isolation de la chambre d'amplification 31 par rapport au milieu ambiant, permettant la variation de volume de la chambre d'amplification 31. Cette structure peut également avoir une raideur mécanique propre en fonction de son extension par rapport à sa longueur d'équilibre, ce qui contribue au bilan d'effort sur le clapet 2 et permet un positionnement en chaque point de la course du clapet 2 en assurant une pression différente à l'intérieur de la cavité définie par cette structure.

La chambre d'amplification 31 est reliée à une ligne d'alimentation 41 et à une ligne de refoulement 51, réalisant respectivement l'alimentation et l'évacuation de gaz dans la chambre d'amplification 31. Le gaz dans la chambre d'amplification 31 peut être le même que celui circulant dans le conduit 1, ou être un gaz distinct, ou encore un liquide.
Dans le cas où le gaz dans la chambre d'amplification 31 est le même que celui circulant dans le conduit 1, la ligne d'alimentation 41 et la ligne de refoulement 51 sont typiquement reliées au conduit 1 de manière à prélever du gaz en amont du clapet 2.

La ligne d'alimentation 41 comprend un régulateur d'alimentation 42 régulant le débit de gaz entrant dans la chambre d'amplification 31, tandis que la ligne de refoulement 51 comprend un régulateur de refoulement 52 régulant le débit de gaz sortant de la chambre d'amplification 31.

Parmi le régulateur d'alimentation 42 et le régulateur de refoulement 52, un seul de ces régulateurs délivre un débit fixe, et l'autre est un régulateur pouvant délivrer un débit variable, piloté au moyen d'une commande.

La variation de débit est typiquement réalisée par variation de la section de passage au niveau du régulateur d'alimentation 42 ou de refoulement 52.

Dans le mode de réalisation représenté sur la figure 1, le régulateur de refoulement 52 est un régulateur délivrant un débit variable, en l'occurrence un réducteur de débit variable piloté au moyen d'une commande 43, tandis que le régulateur d'alimentation 42 délivre un débit fixe ; il s'agit ici d'une restriction.
La description ci-après vise cette configuration illustrée sur la figure 1. La configuration inverse est également possible, dans laquelle le régulateur d'alimentation 42 délivre un débit variable et est piloté au moyen d'une commande, tandis que régulateur de refoulement 52 est à débit fixe.

Par conséquent, le contrôle de la pression au sein de la chambre d'amplification 31 est réalisé directement par le pilotage du régulateur de refoulement 52 au moyen de la commande 53. Cette unique commande 53 permet ainsi de contrôler la pression au sein de la chambre d'amplification 31, et donc de piloter le déplacement du clapet 2.
Comme indiqué précédemment, le pilotage en pression du clapet 2 résulte de pressions s'appliquant sur deux surfaces opposées du clapet ; une surface proximale 21 du clapet 2 et une surface distale 22 du clapet 2.
Or, la surface distale 22 du clapet est fixée à la partie proximale 32 de la chambre d'amplification 31, la partie proximale 32 de la chambre d'amplification 31 étant configurée de manière à avoir une surface plus importante sur la surface proximale 21 du clapet 2.
Ainsi, en appliquant une pression identique sur la surface proximale 21 du clapet 2 et sur la partie proximale 32 de la chambre d'amplification 31, la surface plus importante de la partie proximale 32 de la chambre d'amplification 31 va entrainer une force résultante plus importante que celle résultant de la pression appliquée sur la surface proximale 21 du clapet 2.

La chambre d'amplification 31 réalise ainsi une amplification de la commande en pression pour le pilotage du piston 2 ; la pression nécessaire au pilotage du piston 2 est ainsi réduite.

Le déplacement du piston 2 et donc le pilotage du débit dans le conduit 1 peut donc être réalisée au moyen d'une unique commande 53, dont les dimensions peuvent être réduites du fait de la fonction d'amplification de la chambre d'amplification 31.

Le positionnement du clapet 2 est réalisé par équilibrage des forces s'appliquant sur le clapet 2, ces forces résultant des pressions en amont du clapet 2 et dans la chambre d'amplification 31 comme décrit précédemment, ainsi que de la raideur mécanique éventuelle des parois 34 et 35 de la structure isolant la chambre d'amplification 31.

Selon sa nature, la commande 53 n'est par ailleurs pas exposée au gaz circulant dans le conduit 1, ce qui permet notamment de s'affranchir au moins en partie des contraintes liées à la circulation d'un gaz cryogénique dans le conduit 1.

La commande 53 est par exemple un actionneur à céramiques piézo-électriques, un actionneur de type piézo-électrique à amplification mécanique, un actionneur à effet magnétostrictif ou un actionneur utilisant des alliages à mémoire de forme magnétique, dont les déformations sont contrôlées par un champ magnétique externe qui leur est appliqué.
De tels actionneurs ne pourraient pas être utilisés directement, sans la chambre d'amplification 31, pour piloter le déplacement du clapet 2, en ce que le déplacement qu'ils permettent et la force qu'ils développent ne seraient pas suffisants.

Le fluide circulant dans le conduit 1 est typiquement un gaz ou diphasique comprenant un gaz, par exemple un ergol cryogénique.

Le dispositif proposé permet ainsi de réaliser un gain de masse et d'encombrement significatif, notamment lors de la conception de moteurs cryotechniques de faible poussée.
En effet, le dispositif proposé permet notamment de dé-corréler le dimensionnement du dispositif actionneur 53 par rapport au débit de gaz traversant le conduit 1, ce qui permet ainsi un gain important de masse dans le cas d'un débit réduit de gaz.

Par ailleurs, la structure proposée ne nécessite pas l'utilisation de mécanismes de transformation de mouvement ou de transmission, et est ainsi avantageuse en termes de conception.
De plus le pilotage proposé au moyen d'un équilibrage de pressions permet d'obtenir un dispositif rapide.

## Revendications

1. Dispositif de régulation de débit d'un gaz dans un conduit (1), comprenant un clapet (2) muni d'un actionneur (3), le clapet (2) étant configuré de manière à sélectivement obturer le conduit (1),
dans lequel le déplacement du clapet (2) est piloté par la résultante d'une part de la pression en amont du clapet (2) dans le conduit (1) qui s'exerce sur une surface proximale (21) du clapet (2),
d'autre part, d'une pression de pilotage appliquée sur une surface distale (22) du clapet (2), supérieure à la surface proximale (21) du clapet (2), ladite pression de pilotage étant établie dans une chambre d'amplification (31) munie d'une ligne d'alimentation (41) et d'une ligne de vidange (51), l'une desdites lignes d'alimentation (41) ou de vidange (51) ayant un débit fixe, et l'autre ayant un débit variable piloté par une commande (53),
le dispositif étant **caractérisé en ce que** ledit conduit (1) comprend une portion amont (13) et une portion aval (14) non alignées, le clapet (2) étant aligné et monté coulissant dans la portion amont (13) de sorte que la surface proximale (21) du clapet (2) corresponde à la section interne de la portion amont (13) du conduit (1).

2. Dispositif selon la revendication 1, dans lequel la chambre d'amplification (31) est formée par un soufflet dont une extrémité (32) est reliée à la surface proximale (21) du clapet (2), et dont une autre extrémité (33) est fixe.

3. Dispositif selon l'une des revendications 1 ou 2, dans lequel la commande (53) est choisie parmi les actionneurs suivant : un actionneur à céramiques piézo-électriques, un actionneur de type piézo-électrique à amplification mécanique, un actionneur à effet magnétostrictif ou un actionneur utilisant des alliages à mémoire de forme magnétique, dont les déformations sont contrôlées par un champ électrique ou magnétique externe qui leur est appliqué.

4. Dispositif selon l'une des revendications 1 à 3, dans lequel la chambre d'amplification (1) est alimentée en gaz par prélèvement dans le conduit (1) en amont du clapet (2).

## Patentansprüche

1. Durchflusssteuerungsvorrichtung für ein Gas in einem Kanal (1), umfassend eine Klappe (2), die mit einem Stellglied (3) ausgestattet ist, wobei die Klappe (2) ausgestaltet ist, um den Kanal (1) selektiv zu verschließen,
wobei die Bewegung der Klappe (2) resultierend einerseits durch den Druck vor der Klappe (2) in dem Kanal (1) gesteuert wird, der auf eine proximale Fläche (21) der Klappe (2) wirkt,
andererseits durch einen Steuerdruck, der auf eine distale Fläche (22) der Klappe (2) angewendet wird, die sich über der proximalen Fläche (21) der Klappe (2) befindet, wobei der Steuerdruck in einer Verstärkungskammer (31) gebildet wird, die mit einer Speiseleitung (41) und einer Auslassleitung (51) ausgestattet ist, wobei eine der Speise- (41) oder Auslassleitung (51) einen festen Durchfluss aufweist und die andere einen variablen Durchfluss aufweist, der durch eine Steuerung (53) gesteuert wird,
wobei die Vorrichtung **dadurch gekennzeichnet ist, dass** der Kanal (1) einen vorgelagerten Teil (13) und einen nachgelagerten Teil (14) umfasst, die nicht ausgerichtet sind, wobei die Klappe (2) verschiebbar in dem vorgelagerten Teil (13) ausgerichtet und montiert ist, sodass die proximale Fläche (21) der Klappe (2) dem inneren Abschnitt des vorgelagerten Teils (13) des Kanals (1) entspricht.

2. Vorrichtung nach Anspruch 1, wobei die Verstärkungskammer (31) durch einen Blasebalg gebildet wird, von dem ein Ende (32) mit der proximalen Fläche (21) der Klappe (2) verbunden ist, und von dem ein anderes Ende (33) fest ist.

3. Vorrichtung nach einem der Ansprüche 1 oder 2, wobei die Steuerung (53) aus den folgenden Stellgliedern ausgewählt ist: einem Stellglied mit piezoelektrischer Keramik, einem piezoelektrischen Stellglied mit mechanischer Verstärkung, einem Stellglied mit magnetostriktivem Effekt oder einem Stellglied, bei dem magnetische Formgedächtnislegierungen verwendet werden, deren Verformungen durch ein externes elektrisches oder Magnetfeld gesteuert werden, das darauf angewendet wird.

4. Vorrichtung nach einem der Ansprüche 1 bis 3, wobei der Verstärkungskammer (1) durch eine Entnahme in dem Kanal (1) vor der Klappe (2) Gas zugeführt wird.

## Claims

1. A device for regulating flow rate of a gas in a duct (1), the device comprising a valve member (2) having an actuator (3), the valve member (2) being configured in such a manner as to shut off the duct (1) selectively, wherein movement of the valve member (2) is controlled by the resultant firstly of pressure in the duct (1) upstream from the valve member (2) acting on a proximal surface (21) of the valve member (2), and secondly of a control pressure applied to a distal surface (22) of the valve member (2) of area greater than that of the proximal surface (21) of the valve member (2), said control pressure being established in an amplification chamber (31) having a feed line (41) and an emptying line (51), one of said feed and emptying lines (41, 51) presenting a flow rate that is constant and the other presenting a flow rate that is variable and that is controlled by control means (53), the device being **characterized in that** said duct (1) has an upstream portion (13) and a downstream portion (14) that are not in alignment, the valve member (2) being in alignment with and slidably mounted in the upstream portion (13) in such a manner that the proximal surface (21) of the valve member (2) corresponds to the inside section of the upstream portion (13) of the duct (1).

2. A device according to claim 1, wherein the amplification chamber (31) is formed by a bellows having one end (32) connected to the proximal surface (21) of the valve member (2) and another end (33) that is stationary.

3. A device according to any one of claims 1 or 2, wherein the control means (53) are selected from the following actuators: a piezoelectric ceramic actuator; a piezoelectric type actuator with mechanical amplification; a magnetostrictive effect actuator; and an actuator using magnetic shape memory alloys, of deformation controlled by an external electric or magnetic field that is applied thereto.

4. A device according to any one of claims 1 to 3, wherein the amplification chamber (1) is fed with gas bled off from the duct (1) upstream from the valve member (2) .
